# EUROPÄISCHE PATENTSCHRIFT

(11) **EP 3 266 546 B1**
(45) Veröffentlichungstag und Bekanntmachung des Hinweises auf die Patenterteilung: **23.01.2019**
(21) Anmeldenummer: 16177888.1
(22) Anmeldetag: 05.07.2016
(51) Int. Cl.: B23B 31/28, B23Q 3/12

(54) **SPANNEINHEIT**
CLAMPING UNIT
UNITE DE SERRAGE

(43) Veröffentlichungstag der Anmeldung: 10.01.2018
(60) Teilanmeldung: 17203845.7
(73) Patentinhaber: Narr Beteiligungs GmbH, 73230 Kirchheim/Teck (DE)
(72) Erfinder: Brosowsky, Paul, 73066 Uhingen (DE); Trebes, Herbert, 73614 Schorndorf (DE)
(74) Vertreter: Ruckh, Rainer Gerhard

(56) Entgegenhaltungen:
- EP-A1- 2 868 410
- EP-A1- 2 939 773
- EP-A2- 2 272 625
- DE-A1- 19 805 165
- DE-A1-102007 048 121
- DE-U1-202012 102 578
- US-A- 1 534 572
- US-A- 4 567 794
- US-A1- 2003 178 797

## Beschreibung

Die Erfindung betrifft eine Spanneinheit gemäß dem Oberbegriff des Patentanspruchs 1.

Derartige Spanneinheiten werden allgemein zum stationären Spannen von Werkstücken in Bohr- und Fräsmaschinen sowie in Bearbeitungszentren und auch zur Betätigung von Spannfuttern für Werkstücke bei rotativen Bearbeitungen in Dreh-, Schleif- und Rundtaktmaschinen eingesetzt.

Spanneinheiten der genannten Art weisen typischerweise hydraulische Antriebseinheiten auf, um die zum Spannen oder Lösen von Werkstücken notwendigen Spannkräfte zu erzeugen. Derartige Hydraulikeinheiten weisen jedoch abgesehen von deren hohem konstruktiven Aufwand auch den Nachteil auf, dass diese auf Schaltsignale relativ träge reagieren, so dass Anwendungen problematisch sind, bei welchen zum Beispiel aus Produktivitätsgründen sehr schnelle und präzise Bewegungen von Spannsystemen zur Durchführung von Spannvorgängen oder Lösevorgängen gefordert werden.

Aus der DE 20 2013 101 345 U1 ist eine Magnetspannvorrichtung bekannt, welche eine Spannfläche, wenigstens ein elektromagnetisches Spannmittel zum Aufspannen eines Werkstücks in der Spannfläche und eine Zentriervorrichtung zum Zentrieren des Werkstücks aufweist, wobei die Zentriervorrichtung wenigstens eine in der Spannfläche verschiebbare Grundspannbacke aufweist. Der Grundspannbacke ist eine bezüglich der Spannfläche in eine abgesenkte oder angehobene Position bewegbare Spannbacke zugeordnet. Die Spannbacke weist einen gesonderten Antrieb, insbesondere einen pneumatischen, hydraulischen, mechanischen, magnetischen, insbesondere elektromagnetischen, elektromotorischen oder manuellen Hubantrieb auf. Die Verwendung elektromotorischer Antriebe ist dort nur pauschal erwähnt.

Die US 4 567 794 A betrifft eine Spanneinheit gemäß dem Oberbegriff des Patentanspruchs 1 zum Spannen von Werkstücken. Die Spannvorrichtung weist einen Motor und eine Getriebeeinheit mit einer Anordnung von Rollen auf. Die Getriebeeinheit setzt eine Rotationsbewegung in eine Translationsbewegung eines Betätigungselements um, wodurch Spannelemente gelöst oder gespannt werden können.

Die EP 2 868 410 A1 betrifft eine Spanneinrichtung für Werkzeugmaschinen, die mit einem Kraftspannfutter versehen ist und die einen elektrischen Antriebsmotor sowie einen Bewegungswandler mit Kraftspeicher aufweist. Auf der Abtriebswelle des Antriebsmotors ist ein Abtriebsglied drehbar gelagert, das ständig mit dem Bewegungswandler in Triebverbindung steht. Außerdem ist das Abtriebsglied mittels einer ersten Servoeinrichtung mit der Abtriebswelle koppelbar und der Bewegungswandler ist mittels einer zweiten Servoeinrichtung unmittelbar mit der Spindel der Werkzeugmaschine verriegelbar.

Die US 1 534 572 A betrifft eine Spannvorrichtung mit einem Elektromotor, einem Differentialgetriebe und Aktuatormitteln zur Betätigung von Spannelementen. Das Differentialgetriebe weist kugelförmige Walzkörper auf.

Die DE 20 2012 102 678 U1 betrifft eine Magnetspannvorrichtung mit einer Spannfläche, wenigstens einem magnetisch wirkenden Spannmittel zum Aufspannen eines Werkstückes auf der Spannfläche und einer Zentriervorrichtung zum Zentrieren des Werkstückes mit zwei oder mehr in der Spannfläche verschiebbaren Spannbacken. Der Zentriervorrichtung ist ein einen Stator und einen Rotor aufweisender elektrischer Rotationsantrieb mit einer Rotationsachse zugeordnet. Die Zentriervorrichtung weist Mittel zum Ableiten von linearen Spannbackenbewegungen aus einer Rotationsbewegung des Rotationsantriebs auf.

Die DE 10 2007 048 121 A1 betrifft eine Schutzvorrichtung für eine Werkzeugmaschine zur Bearbeitung von Werkstücken, mit einem mindestens eine Spannfläche zum Spannen eines Spannobjekts, insbesondere eines Werkzeugs oder eines Werkstücks, aufweisenden Spannkörper und mit einer Sensoranordnung zur Messung einer Planlage einer Spannobjektfläche des Spannobjekts.

Die EP 2 939 773 A1 betrifft eine Spannvorrichtung zum Spannen eines Werkstücks und umfasst ein Spannfutter und eine im Spannfutter gelagerte Spannzange. Ein Bajonettverschluss ist vorgesehen, mittels dessen die Spannzange werkzeuglos am Spannfutter befestigt oder von diesem gelöst werden kann und wobei die Spannzange gegen einen feststehenden Teil des Spannfutters zwischen einer Spannstellung und einer Lösestellung bewegt werden kann. Im feststehenden Teil des Spannfutters ist wenigstens ein Verriegelungselement gelagert, welches den Bajonettverschluss in der Spannstellung gegen ein Lösen sichert und welches den Bajonettverschluss in der Lösestellung für eine Betätigung freigibt.

Die DE 198 05 165 A1 betrifft ein Spannsystem bestehend aus einem Spannzylinder und einem Aufspannteil, das mit dem Einzugsnippel versehen ist, der geeignet ist für ein Einsetzen und Einziehen durch den Spannzylinder, wobei eine Zentrierung zwischen dem Aufspannteil und dem Spannzylinder am Außenumfang des Spannzylinders erfolgt.

Die US 2003/0178797 A1 betrifft ein Adapter-Werkzeug für ein Schneidwerkzeug. Das Adapter-Werkzeug ist mit einem ersten Ende an eine rotierende Einheit gekoppelt. An einem zweiten Ende ist ein konisches Teil vorgesehen, das mit einem Werkzeugadapter verbunden werden kann.

Der Erfindung liegt die Aufgabe zugrunde, eine Spanneinheit bereitzustellen, welche bei konstruktiv geringem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Spanneinheit zum Spannen eines Werkstücks mit einem elektrischen Antrieb und einer eine Anordnung von Wälzkörpern aufweisenden Getriebeeinheit. Letztere dient dazu, eine Rotationsbewegung in eine Translationsbewegung eines Betätigungselements umzusetzen. Durch Translationsbewegungen des Betätigungselements sind Spannelemente in eine Spannstellung, in welcher ein Werkstück mit den Spannelementen gespannt ist, und in eine Lösestellung, in welcher die Spannelemente das Werkstück freigeben, versetzbar. Ein Grundmodul, in dem der elektrische Antrieb, die Getriebeeinheit und das Betätigungselement integriert sind, weist einen Wechseleinsatz mit darin angeordneten Spannelementen auf. Weiterhin weist das Grundmodul eine Anordnung von Kugeln auf, die Mittel zur Bildung einer Klemmverbindung mit dem Wechseleinsatz sind. Durch Translationsbewegungen der Betätigungselemente ist ein Eingriff der Kugeln mit dem Wechseleinsatz bewirkt oder aufgehoben.

Gegebenenfalls kann die Spanneinheit auch so ausgebildet sein, dass das Betätigungselement rotative Bewegungen ausführt.

Erfindungsgemäß wird somit eine elektromechanische Spanneinheit bereitgestellt, die bei einem kompakten, kostengünstigen Aufbau ein reproduzierbares, genaues Spannen von Werkstücken ermöglicht, wobei insbesondere auch schnelle Spannvorgänge exakt durchgeführt werden können, da der elektrische Antrieb der Spanneinheit im Gegensatz zu hydraulischen Antriebseinheiten weniger trägheitsbehaftet ist.

Ein wesentlicher Aspekt der Erfindung besteht in der Kombination des elektrischen Antriebs mit der über eine Anordnung von Wälzkörpern verfügenden Getriebeeinheit. Diese Getriebeeinheit weist einen kompakten Aufbau auf und gewährleistet eine präzise und reproduzierbare Umsetzung der Rotationsbewegung des Rotors des elektrischen Antriebs in eine Translationsbewegung des Betätigungselements, das auf das Spannsystem einwirkt. Da die Wälzkörper unmittelbar in Eingriff mit dem Betätigungselement sind und das Betätigungselement unmittelbar auf die Spannelemente zur Durchführung von Spannvorgängen einwirkt, ist nur eine geringe Anzahl von Bauteilen notwendig, um die Rotationsbewegungen in Translationsbewegungen für die Spann- und Lösevorgänge des Werkstücks umzusetzen. Dadurch weist die Spanneinheit einen kompakten und kostengünstigen Aufbau auf.

Ein weiterer Vorteil der Erfindung besteht darin, dass mit der Getriebeeinheit ein Spannen des Werkstücks sowohl durch Zugbewegungen als auch durch Drehbewegungen, die auf die Spannelemente ausgeübt werden, bewirkt wird, wobei besonders vorteilhaft ist, dass bei den Zug- und Drehbewegungen dieselben Kräfte durch den elektrischen Antrieb generiert werden, so dass mit beiden Bewegungsarten dieselbe Präzision beim Spannen und Lösen erhalten wird.

Bei einer Ausführungsform, bei der Spannvorgänge durch Drehbewegungen des Betätigungselements erreicht werden, kann das Betätigungselement von einer Druckhülse oder dergleichen gebildet sein. Bei einer Ausführungsform, bei welcher das Spannen durch Zugwirkung erfolgt, kann das Betätigungselement vorteilhaft von einer Zugstange gebildet sein.

Erfindungsgemäß weist die Spanneinheit ein Grundmodul, in dem der elektrische Antrieb, die Getriebeeinheit und das Betätigungselement integriert sind, und einen Wechseleinsatz mit dem eigentlichen Spannsystem auf.

Dabei können Wechseleinsätze mit unterschiedlichen Spannelementen an dem Grundmodul anbringbar sein.

Die so konfigurierte Spanneinheit bildet ein modulares System, das einfach und flexibel an unterschiedliche Applikationen angepasst werden kann. Das modulare System ist dabei so aufgebaut, dass das Grundmodul mit dem elektrischen Antrieb, der Getriebeeinheit und dem Betätigungselement eine universelle Einheit bildet, an welcher unterschiedliche Wechseleinsätze als applikationsspezifische Bauteile befestigt werden können. Die Wechseleinsätze weisen dabei unterschiedliche Spannelemente zum Spannen unterschiedlicher Werkstücke auf, wobei insbesondere Wechseleinsätze für eine Innenspannung und auch Wechseleinsätze für eine Außenspannung von Werkstücken vorgesehen sein können. Besonders vorteilhaft sind das Grundmodul und der Wechseleinsatz über einen Bajonettverschluss reversibel lösbar verbunden.

Damit kann ein Wechseleinsatz einfach und ohne Werkzeuge am Grundmodul befestigt und wieder von diesem gelöst werden.

Das Grundmodul weist eine Anordnung von Kugeln auf, die Mittel zur Bildung einer Klemmverbindung mit dem Wechseleinsatz sind, wobei zweckmäßig die Kugeln eine symmetrisch zur Längsachse des Grundmoduls ausgebildete ringförmige Anordnung bilden.

Dabei ist durch Translationsbewegungen des Betätigungselements ein Eingriff der Kugeln mit dem Wechseleinsatz bewirkt oder aufgehoben.

Ein wesentlicher Vorteil dieser Anordnung liegt darin, dass allein durch die vom elektrischen Antrieb gesteuerte Bewegung des Betätigungselements der Wechseleinsatz am Grundmodul festgeklemmt und damit verriegelt oder freigegeben wird, so dass durch Betätigen des Bajonettverschlusses der Wechseleinsatz vom Grundmodul abgenommen werden kann.

Dabei ist durch eine spezifische Lagerung der Kugeln im Grundmodul gewährleistet, dass dann, wenn durch das Betätigungselement das Spannsystem in der Spann- oder Lösestellung ist, sich das Betätigungselement derart in Position relativ zu den Kugeln befindet, dass mit den Kugeln ein Klemmen des Wechseleinsatzes erfolgt, so dass dieser nicht vom Grundmodul gelöst werden kann.

Erst wenn das Betätigungselement in eine von den vorgenannten ersten beiden Positionen abweichende dritte Position eingebracht wird, kann der Wechseleinsatz am Grundmodul gelöst werden. Damit ergibt sich eine komfortable Handhabung der Spanneinheit, wobei durch die Steuerung des Betätigungselements über den elektrischen Antrieb Fehlbedienungen sicher ausgeschlossen werden können.

Die Erfindung wird im Folgenden anhand der Zeichnungen erläutert. Es zeigen:
- Figur 1:: Perspektivische Darstellung der erfindungsgemäßen Spanneinheit mit einem Grundmodul und einem Wechseleinsatz
- a): bei am Grundmodul in einer Sollposition fixiertem Wechseleinsatz
- b): bei einem gegenüber der Sollposition gedrehten Wechseleinsatz
- c): bei vom Grundmodul abgenommenem Wechseleinsatz
- Figur 2:: Längsschnittdarstellung der Spanneinheit gemäß Figur 1.
- Figur 3:: Detaildarstellung der Spanneinheit mit dem Vorderende der Zugstange und einer Kugel als Klemmelement
- a): bei gespanntem Werkstück
- b): bei gelöstem Werkstück
- c): bei gelöstem Wechseleinsatz

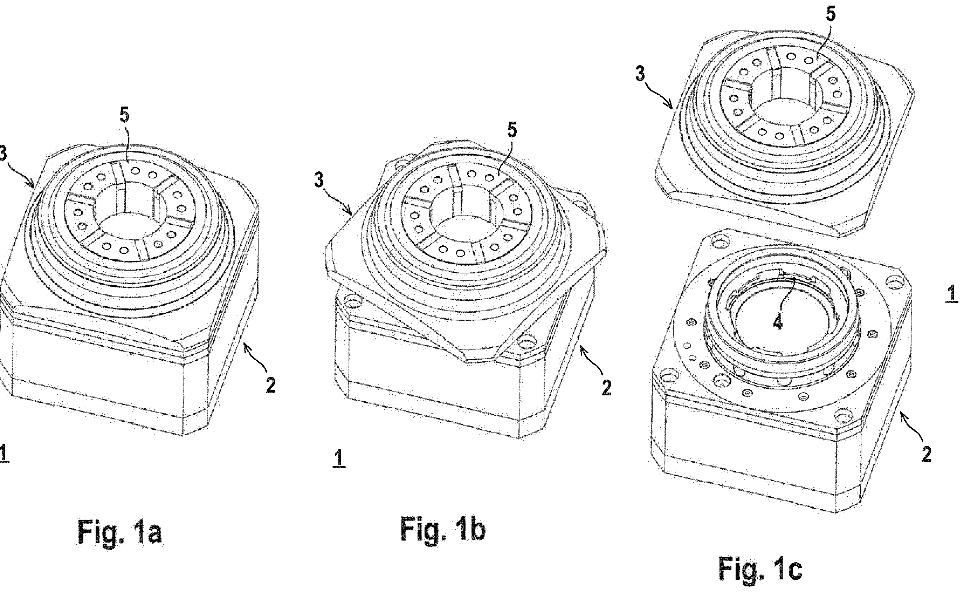

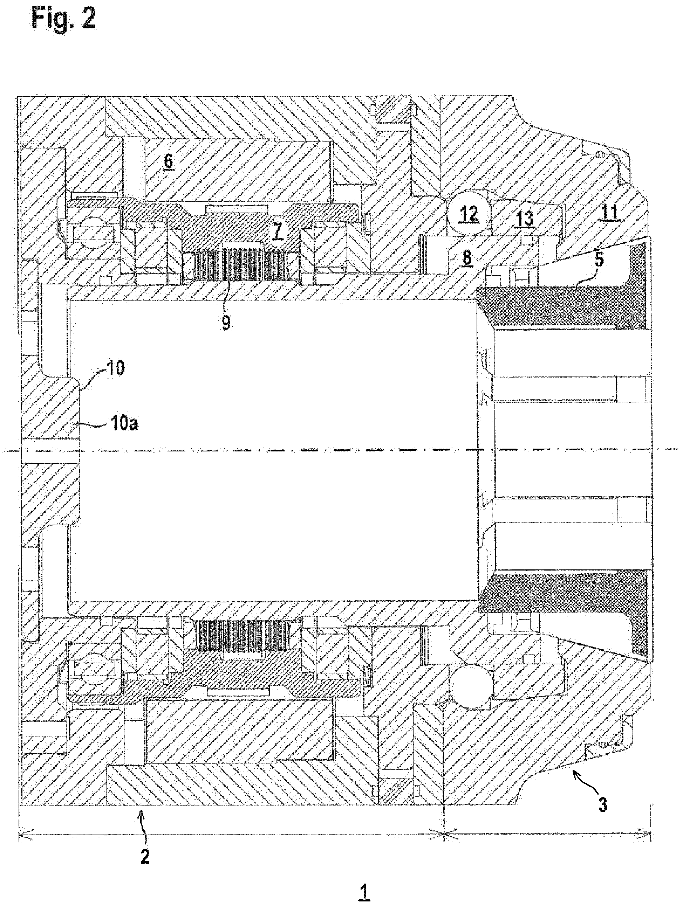

Die Figuren 1a bis 1c sowie 2 zeigen ein Ausführungsbeispiel der erfindungsgemäßen Spanneinheit 1 zum Spannen von Werkstücken.

Wie insbesondere die Figuren 1a bis 1c zeigen, weist die Spanneinheit 1 einen modularen Aufbau derart auf, dass an einem Grundmodul 2 ein Wechseleinsatz 3 reversibel lösbar befestigt werden kann. Dabei bildet das Grundmodul 2 ein universelles Modul, an dem unterschiedliche Wechseleinsätze 3 befestigt werden können. Die Fixierung des Wechseleinsatzes 3 am Grundmodul 2 erfolgt mittels eines Bajonettverschlusses. In Figur 1c sind Verschlusselemente 4 dieses Bajonettverschlusses am Grundmodul 2 sichtbar.

Jeder Wechseleinsatz 3 weist im Regelfall mehrere Spannelemente 5 zum Spannen eines Werkstücks auf. Die einzelnen Wechseleinsätze 3 unterscheiden sich durch die Ausbildung der Spannelemente 5. In dem Beispiel der Figuren 1a bis 1c bilden die Spannelemente 5 einen Spannkopf für eine Außenspannung eines Werkstücks. Generell können Wechseleinsätze 3 auch Spannsysteme aufnehmen, deren Gestaltung und Funktionsweise eine Innenspannung des Werkstücks ermöglicht.

Figur 1a zeigt den Wechseleinsatz 3 in seiner Sollposition am Grundmodul 2. Wenn der Wechseleinsatz 3 in dieser Sollposition am Grundmodul 2 befestigt ist, ist die Spanneinheit 1 komplett montiert zur Durchführung von Spannvorgängen eines Werkstücks. Zum Lösen des Wechseleinsatzes 3 wird dieser gegenüber dem Grundmodul 2 gedreht (Figur 1b) und dann abgenommen (Figur 1c). Danach kann beispielsweise ein anderer Wechseleinsatz 3 am Grundmodul 2 befestigt werden.

Wie aus Figur 2 ersichtlich, ist in dem Grundmodul 2 der Spanneinheit 1 ein elektrischer Antrieb integriert, der beispielsweise von einem Servomotor gebildet ist. Der elektrische Antrieb wird von einer nicht dargestellten Rechnereinheit gesteuert. Er verfügt in bekannter Weise über einen stationär im Grundmodul 2 gelagerten Stator 6 und einen drehbaren Rotor 7. Der Rotor 7 ist im Innenraum des hohlzylindrischen Stators 6 um eine Achse, die mit der Symmetrieachse des Grundmoduls 2 zusammenfällt, drehbar gelagert.

Zur Durchführung von Spannvorgängen ist ein Betätigungselement in Form einer Zugstange 8 vorgesehen, die Bestandteil einer dem elektrischen Antrieb zugeordneten Getriebeeinheit ist. Die Zugstange 8 bildet einen hohlzylindrischen Körper, dessen vorderes verbreitertes Ende über den dem Wechseleinsatz 3 zugeordneten Rand des Grundmoduls 2 hervorsteht.

Die Getriebeeinheit wird komplettiert durch die Anordnung von Wälzkörpern 9, die in Umfangsrichtung des Rotors 7 beziehungsweise der Zugstange 8 verteilt angeordnet sind. Die Wälzkörper 9 sind einerseits in Eingriff mit dem Rotor 7 und andererseits mit einem Gewinde an der Außenseite der Zugstange 8. Die Längsachsen der Wälzkörper 9 verlaufen parallel zur Symmetrieachse des Grundmoduls 2. Durch die Drehbewegung des Rotors 7 drehen die Wälzkörper 9 und erzeugen durch den Eingriff am Gewinde der Zugstange 8 eine Translationsbewegung der Zugstange 8, die zum Spannen beziehungsweise Lösen des Werkstücks im Spannkopf dient.

Figur 2 zeigt die Situation von Figur 1a, in der der Wechseleinsatz 3 in seiner Sollposition am Grundmodul 2 gelagert ist. Der Wechseleinsatz 3 ist dabei an der Stirnfläche des Grundmoduls 2 gelagert. Am hinteren Rand des Grundmoduls 2 befindet sich eine Anschlaggrundplatte 10, deren ebene Oberseite eine Anlagefläche 10a ausbildet, auf welcher das zu spannende Werkstück mit seinem hinteren, in den Hohlraum der Zugstange 8 ragenden Ende aufgesetzt werden kann. Je nach Größe des Werkstücks kann auf die Anlagefläche 10a auch ein nicht dargestellter Adapter aufgesetzt werden, auf welchem das Werkstück rückseitig gelagert werden kann.

Wie aus Figur 2 weiter ersichtlich, weist der Wechseleinsatz 3 einen Futterkörper 11 auf, der über eine an seinem vorderen Rand ausmündende konische Aussparung verfügt, in der die den Spannkopf bildenden Spannelemente 5 gehalten werden. Der Futterkörper 11 weist auch an seinem hinteren Rand eine Öffnung auf, in welche das verbreiterte vordere Ende der Zugstange 8 ragt.

Im Grundmodul 2 ist eine Anordnung von identisch ausgebildeten Kugeln 12 gelagert, welche Klemmelemente bilden, mittels derer eine Klemmverbindung zwischen Grundmodul 2 und Wechseleinsatz 3 hergestellt wird. Die Kugeln 12 bilden eine ringförmige Anordnung, die in Umfangsrichtung des Grundmoduls 2 umlaufend in jeweils gleichen Abständen zueinander angeordnet sind. Die Anzahl der Kugeln 12 ist abhängig von der Größe des Grundmoduls 2.

Wie Figur 2 zeigt, sind die Kugeln 12 zwischen Segmenten des Grundmoduls 2 und des Futterkörpers 11 gelagert. Weiterhin liegen die Kugeln 12 auch an der Umfangsfläche der Zugstange 8 an. Zur korrekten Ausrichtung der Kugeln 12 sind kegelförmige Ausrichtelemente 13 vorgesehen.

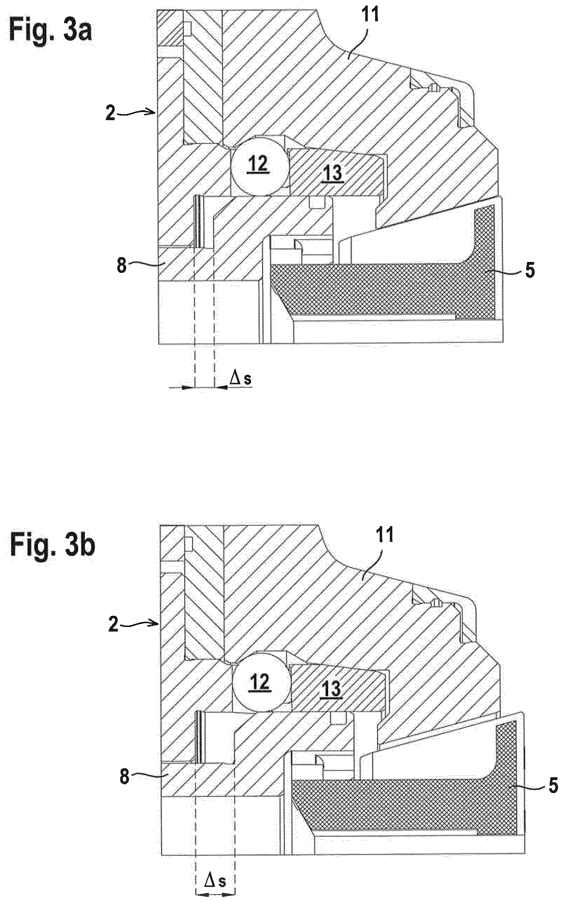

Die Funktionsweise der Spanneinheit 1 wird im Folgenden anhand der Figuren 3a bis 3c erläutert.

Mittels des elektrischen Antriebs wird die Zugstange 8 derart verfahren, dass die Spannelemente 5 des Spannkopfs zwischen einer Spannstellung und einer Lösestellung bewegt werden können, wobei während dieses Arbeitsbetriebs der Spanneinheit 1 der Wechseleinsatz 3 in seiner Sollposition am Grundmodul 2 durch die Klemmwirkung der Kugeln 12 fest gelagert ist.

Figur 3a zeigt die Spannstellung der Spannelemente 5, die dadurch erhalten wird, dass die Zugstange 8 mittels des elektrischen Antriebs in eine erste Sollposition eingebracht wird, in welcher die Zugstange 8 weit in das Grundmodul 2 eingefahren ist, so dass durch eine Zugwirkung der Zugstange 8 die Spannelemente 5 radial nach innen gefahren werden und so das (nicht dargestellte) Werkstück gespannt wird. In dieser Position ist der Abstand Δs der hinteren Flanke der Verbreiterung der Zugstange 8 zum gegenüberliegenden Wandsegment des Grundmoduls 2 minimal.

Die Kugeln 12 liegen dabei berührend an den jeweiligen Segmenten des Grundmoduls 2, am Futterkörper 11 und an der Zugstange 8 an und bewirken so die Klemmung zwischen Grundmodul 2 und Wechseleinsatz 3.

Die Getriebeeinheit ist selbsthemmend ausgebildet, so dass die Spannstellung auch bei ausgeschaltetem elektrischen Antrieb sicher gehalten wird.

Figur 3b zeigt die Lösestellung der Spannelemente 5, in welcher das Werkstück vom Spannkopf gelöst ist. Hierzu ist mittels des elektrischen Antriebs die Zugstange 8 in eine zweite Sollposition eingefahren, in welcher sie gegenüber der ersten Sollposition weiter nach vorne gefahren ist, so dass der Abstand Δs vergrößert ist. Durch das Einfahren der Zugstange 8 in die zweite Sollposition werden die Spannelemente 5 in radialer Richtung nach außen verlagert und geben das Werkstück frei.

Auch in der zweiten Sollposition der Zugstange 8 bleibt die Klemmwirkung der Kugeln 12 erhalten, so dass der Wechseleinsatz 3 am Grundmodul 2 weiterhin fixiert ist.

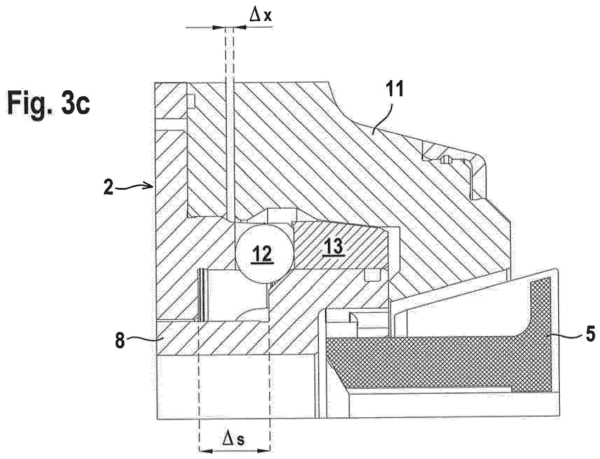

Schließlich kann, wie in Figur 3c dargestellt, mittels des elektrischen Antriebs die Zugstange 8 in eine dritte Sollposition noch weiter nach vorne gefahren werden, so dass der Abstand Δs nun seinen Maximalwert annimmt.

Dadurch entsteht zwischen den gegenüberliegenden Wänden des Grundmoduls 2 und der Zugstange 8 ein Abstand Δx, und die Klemmwirkung der Kugeln 12 ist aufgehoben. Damit ist der Wechseleinsatz 3 von dem Grundmodul 2 gelöst und kann durch Betätigen des Bajonettverschlusses und Verdrehen gegenüber dem Grundmodul 2 (wie in Figur 1b dargestellt) gedreht und dann von diesem abgenommen werden (wie in Figur 1c dargestellt).

Erfindungsgemäß wird der Betrieb der Spanneinheit 1 und insbesondere des elektrischen Antriebs mittels Kontrollmittel elektronisch überwacht und kontrolliert. Hierzu ist in der Rechnereinheit eine Regeleinheit implementiert, mit der die von den Spannelementen 5 ausgeübte Spannkraft und/oder die Spannstellung auf vorgegebene Sollwerte eingestellt wird.

Gemäß einer ersten Variante erfolgt mit der Regeleinheit eine Strom-/ Drehmomentregelung des elektrischen Antriebs, das heißt der Strom und das Drehmoment als interne Größen des elektrischen Antriebs werden zur Vorgabe von Sollwerten für die Regelungsvorgänge genutzt.

Zur Vorgabe von Sollwerten für die Spannkraft können auch Kraftsensoren eingesetzt werden, die im Futterkörper 11 angeordnet werden.

Zur Überwachung der Spannstellung können ebenfalls Sensoren eingesetzt werden. Hierzu eignen sich Näherungsschalter an den Endanschlägen der Zugstange 8. Alternativ können auch lineare Wegmesssysteme zur Anwendung gelangen.

Durch diese Sensoren können Fehlfunktionen beim Spannen und Lösen des Werkstücks sicher detektiert werden. Weiterhin können zur Erfassung oder Kompensation der Fehlfunktionen Strombegrenzungen in der Regeleinheit vorgesehen sein.

Schließlich können Werkstückanlagenkontrollmittel vorgesehen sein, mittels derer die korrekte Anlage des Werkstücks an der Anlagefläche 10a der Anschlaggrundplatte 10 überprüft werden kann. Hierzu können induktive oder kapazitive Sensoren in der Anschlaggrundplatte 10 integriert werden, mittels derer ortsaufgelöst die Entfernungen zwischen Anlagefläche 10a und WerkstückOberfläche erfasst werden können.

### Bezugszeichenliste

- (1): Spanneinheit
- (2): Grundmodul
- (3): Wechseleinsatz
- (4): Verschlusselement
- (5): Spannelement
- (6): Stator
- (7): Rotor
- (8): Zugstange
- (9): Wälzkörper
- (10): Anschlaggrundplatte
- (10a): Anlagefläche
- (11): Futterkörper
- (12): Kugel
- (13): Ausrichtelement

## Patentansprüche

1. Spanneinheit (1) zum Spannen eines Werkstücks mit einem elektrischen Antrieb und einer eine Anordnung von Wälzkörpern (9) aufweisenden Getriebeeinheit, wobei mit der Getriebeeinheit eine Rotationsbewegung in eine Translationsbewegung eines Betätigungselements umsetzbar ist, und wobei durch Translationsbewegungen des Betätigungselements Spannelemente (5) in eine Spannstellung, in welcher ein Werkstück mit den Spannelementen (5) gespannt ist, und in eine Lösestellung, in welcher die Spannelemente (5) das Werkstück freigeben, versetzbar sind,
wobei die Spanneinheit (1) ein Grundmodul (2), in dem der elektrische Antrieb, die Getriebeeinheit und das Betätigungselement integriert sind, aufweist,
**dadurch gekennzeichnet, dass**
die Spanneinheit (1) einen Wechseleinsatz (3) mit darin angeordneten Spannelementen (5) aufweist, dass das Grundmodul (2) eine Anordnung von Kugeln (12) aufweist, die Mittel zur Bildung einer Klemmverbindung mit dem Wechseleinsatz (3) sind, und dass durch Translationsbewegungen des Betätigungselements ein Eingriff der Kugeln (12) mit dem Wechseleinsatz (3) bewirkt oder aufgehoben ist.

2. Spanneinheit nach Anspruch 1, **dadurch gekennzeichnet, dass** das Betätigungselement eine Zugstange (8) ist.

3. Spanneinheit nach Anspruch 1 oder 2 , **dadurch gekennzeichnet, dass** Wechseleinsätze mit jeweils unterschiedlichen Spannelementen (5) an dem Grundmodul (2) anbringbar sind.

4. Spanneinheit nach einem der Ansprüche 1 - 3 , **dadurch gekennzeichnet, dass** das Grundmodul (2) und der Wechseleinsatz (3) über einen Bajonettverschluss reversibel lösbar miteinander verbunden sind.

5. Spanneinheit nach einem der Ansprüche 1 - 4, **dadurch gekennzeichnet, dass** die Kugeln (12) eine symmetrisch zur Längsachse des Grundmoduls (2) ausgebildete ringförmige Anordnung bilden.

## Claims

1. Clamping unit (1) for clamping a workpiece, comprising an electric drive and a transmission unit which comprises an arrangement of roller bodies (9), wherein a rotational movement is convertible by the transmission unit into a translation movement of an actuating element, and wherein, through translation movements of the actuating element, clamping elements (5) are settable into a clamping setting in which a workpiece is clamped by the clamping elements (5) and a release setting in which the clamping elements (5) release the workpiece, wherein the clamping unit (1) comprises a base module (2) in which the electric drive, the transmission unit and the actuating element are integrated, **characterised in that** the clamping unit (1) comprises a change insert (3) with clamping elements (5) arranged therein, that the base module (2) comprises an arrangement of balls (12) which are means for forming a clamping connection with the change insert (3) and that through translation movements of the actuating element an engagement of the balls (12) with the change insert (3) is produced or cancelled.

2. Clamping unit according to claim 1, **characterised in that** the actuating element is a connecting bar (8).

3. Clamping unit according to claim 1 or 2, **characterised in that** change inserts with respectively different clamping elements (5) can be mounted on the base module (2).

4. Clamping unit according to any one of claims 1 to 3, **characterised in that** the base module (2) and the change insert (3) are reversibly detachably connected together by way of a bayonet coupling.

5. Clamping unit according to any one of claims 1 to 4, **characterised in that** the balls (12) define an annular arrangement formed symmetrically with respect to the longitudinal axis of the base module (2).

## Revendications

1. Unité de serrage (1) dévolue à l'ablocage d'une pièce, comprenant un entraînement électrique et une unité de transmission munie d'un ensemble de corps de roulement (9), sachant qu'un mouvement rotatoire peut être converti en un mouvement translatoire d'un élément d'actionnement, à l'aide de ladite unité de transmission, et sachant que des mouvements translatoires dudit élément d'actionnement permettent de transférer des éléments de serrage (5) à une position de serrage dans laquelle une pièce est abloquée par lesdits éléments de serrage (5), et à une position de libération dans laquelle lesdits éléments de serrage (5) libèrent ladite pièce, ladite unité de serrage (1) étant pourvue d'un module de base (2) dans lequel l'entraînement électrique, l'unité de transmission et l'élément d'actionnement sont intégrés, **caractérisée par le fait que** l'unité de serrage (1) comporte un élément intégré interchangeable (3) dans lequel des éléments de serrage (5) sont logés ; **par le fait que** le module de base (2) présente un ensemble de billes (12) constituant des moyens conçus pour établir une liaison par coincement avec l'élément intégré interchangeable (3) ; et **par le fait qu'**une venue en prise desdites billes (12) avec ledit élément intégré interchangeable (3) est instaurée ou supprimée par des mouvements translatoires de l'élément d'actionnement.

2. Unité de serrage selon la revendication 1, **caractérisée par le fait que** l'élément d'actionnement est une tige de traction (8).

3. Unité de serrage selon la revendication 1 ou 2, **caractérisée par le fait que** des éléments intégrés interchangeables, respectivement dotés de différents éléments de serrage (5), peuvent être implantés sur le module de base (2).

4. Unité de serrage selon l'une des revendications 1 - 3, **caractérisée par le fait que** le module de base (2) et l'élément intégré interchangeable (3) sont reliés amoviblement l'un à l'autre, de manière réversible, par l'intermédiaire d'une fermeture à baïonnette.

5. Unité de serrage selon l'une des revendications 1 - 4, **caractérisée par le fait que** les billes (12) forment un ensemble annulaire de réalisation symétrique par rapport à l'axe longitudinal du module de base (2).
